# EUROPEAN PATENT SPECIFICATION

(11) **EP 1 623 800 B1**
(45) Date of publication and mention of the grant of the patent: **28.05.2008**
(21) Application number: 05013323.0
(22) Date of filing: 21.06.2005
(51) Int. Cl.: B27B 5/16

(54) **Table latch assembly for saws**
Tischverriegelungsvorrichtung für Sägen
Dispositif de verrouillage d'une table pour des scies

(30) Priority: 07.07.2004 US 585947 P
(43) Date of publication of application: 08.02.2006
(73) Proprietor: Black & Decker Inc., Newark, Delaware 19711 (US)
(72) Inventor: Gehret, Robert S., Hampstead Maryland 21074 (US); Miller, Mark D., Airville Pennsylvania 17302 (US)
(74) Representative: Bell, Ian Stephen

(56) References cited:
- EP-A- 0 234 215
- EP-A- 0 586 172
- DE-A1- 4 019 222

## Description

This invention relates to a power tool according to the preamble of claim 1 comprising a table latch assembly.

Typical combination table/miter saws have a table that is rotatable relative to a base assembly.

A power tool according to the preamble of claim 1 is disclosed in EP 0 234 215 A1.

It is an object of the invention to provide an improved power tool comprising a table latch assembly for latching the table relative to the base.

According to the present invention there is provided a power tool comprising:
a base assembly;
a table supported by the base assembly and rotatable about an axis between a first position and a second position;
a saw assembly supported by the table, wherein, in the first position the saw assembly is movable from an upper position to a lower position towards the table and, in the second position, the saw assembly is underneath the table, and
a table latch assembly for latching the table in the first and second position;
characterised in that the centre of gravity of the table and the saw assembly is on a first side of said axis when the saw assembly is in the upper position, and is on a second side of said axis when the saw assembly is in the lower position, and said table latch assembly prevents release of the table in the first position when the centre of gravity is on the first side of the axis.

The accompanying drawings illustrate preferred embodiments of the invention according to the practical application of the principles thereof, and in which:
FIG. 1 illustrates a combination table/miter saw according to the invention, whereas FIGS. 1A-1B are side views of the combination table/miter saw in the miter saw and table saw modes, respectively;
FIG. 2 is a perspective view of the table latch assembly according to the invention;
FIG. 3 is a side view of the cam plate of the table latch assembly of FIG. 2; and
FIG. 4 is a side view of the lock plate of the table latch assembly of FIG. 2.

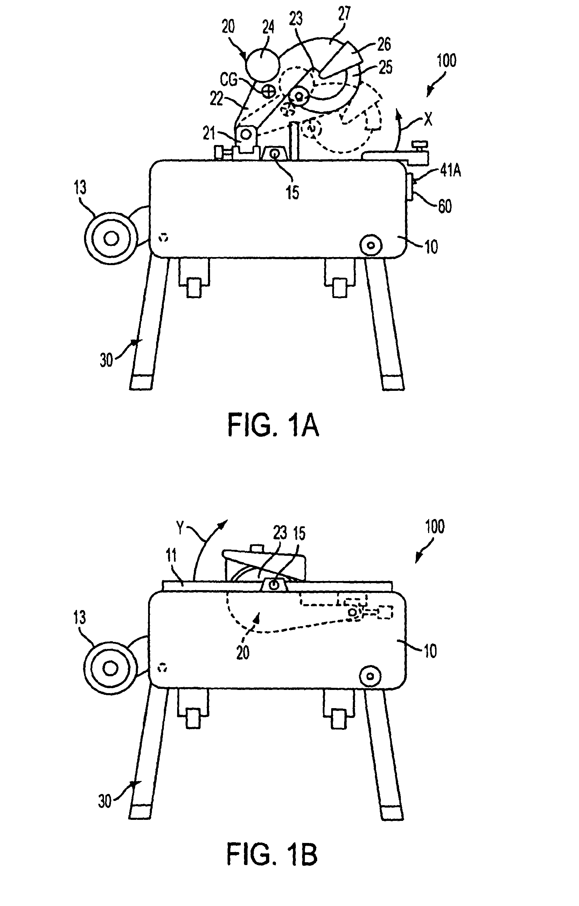

The invention is now described with reference to the accompanying figures, wherein like numerals designate like parts. Referring to FIG. 1, a combination table/miter saw 100 includes a base assembly 10, a table assembly 11 supported by base assembly 10, and a saw assembly 20 supported by the table assembly 11. Saw assembly 20 may include a trunnion 21 disposed on the table assembly 11, a pivotable arm 22 pivotably attached to trunnion 21, a motor 24 supported by the arm 22 and driving a blade 23. Arm 22 also supports upper blade guard 27, which covers an upper part of blade 23. Lower blade guard 25 is pivotally attached to upper blade guard 27. An auxiliary blade guard 26 may be pivotably connected to lower blade guard 25.

Table assembly 11 is pivotally attached to base assembly 10 via joint 15 so that, when the table assembly 11 is in the orientation of FIG. 1A, the saw assembly 20 can act as a miter saw, i.e., saw assembly 20 can be pivoted downwardly towards table assembly 11 to cut a workpiece placed on table assembly 11.

On the other hand, when table assembly 11 is rotated via joint 15 to the orientation of FIG. 1B, the saw 100 acts as a table saw, i.e., saw assembly 20 will be supported by and disposed underneath the table assembly 11. In such orientation, blade 23 extends through the table assembly 11, so that a user can dispose a workpiece on table assembly 11 and push it towards blade 23 for cutting.

Preferably, base assembly 10 has at least one wheel 13 thereon.

Base assembly 10 may also support four leg assemblies 30. Preferably leg assemblies 30 are pivotally attached to base assembly 10.

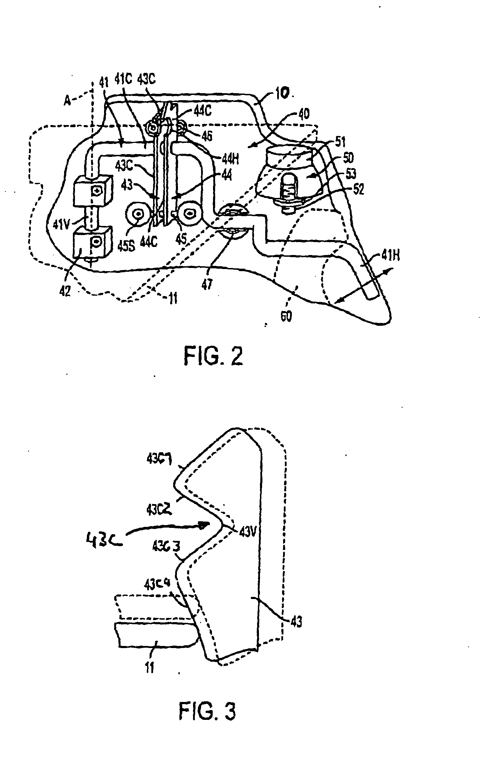

Because the saw 100 can be used as either a table saw or a miter saw, a table latch assembly 40 is provided that facilitates the movement of table assembly 11 to switch between the table saw and miter saw modes. Referring to FIGS. 2-4, the table latch assembly 40 may include a link 41 pivotally attached to base assembly 10.

Link 41 may be sandwiched between base assembly 10 and holders 42. Preferably, link 41 has a vertical portion 41V so that link 41 can rotate about the longitudinal axis A of the vertical portion 41V. Preferably axis A is substantially vertical.

Link 41 may have a portion 41C that is connected to vertical portion 41V. Portion 41 C may pivotably support a cam plate 43 and a lock plate 44. Preferably cam plate 43 and lock plate 44 are pivotally attached to base assembly 10 via a shaft 45, which may be captured unto base assembly 10 by screws 45S.

Persons skilled in the art will recognize that, due to the rotational motion of vertical portion 41V along axis A, link 41, cam plate 43 and lock plate 44 are movable towards and away from base assembly 10. Preferably springs 46 may be provided on base assembly 10 to contact cam plate 43 and/or lock plate 44 to bias link 41, cam plate 43 and lock plate 44 away from base assembly 10. Similarly, spring 47 may be provided on base assembly 10 to contact link 41 to bias link 41, cam plate 43 and lock plate 44 away from base assembly 10.

As shown in FIG. 3, cam plate 43 may have cam surfaces 43C, which may contact table assembly 11. As table assembly 11 is moved between positions, such movement will push cam plate 43 towards base assembly 10. The movement of cam plate 43 in turn causes the movement of lock plate 44 and link 41 towards base assembly 10.

Referring to FIGS. 1 and 3, persons skilled in the art will recognize that saw 100 may be changed from miter saw mode (FIG. 1A) to table saw mode (FIG. 1B) by rotating table assembly 11 in the rotational direction X shown in FIG. 1A. In such motion, a side edge on the front portion of table assembly 11 may contact the second uppermost cam surface 43C2 shown in FIG. 3, moving lock plate 44 and link 41 towards base assembly 10. As the rotational movement of table assembly 11 approaches 180 degrees, a side edge on the originally rear portion of table assembly 11 (and now becoming the front portion of table assembly 11) contacts the lowermost cam surface 43C4, as shown in FIG. 3, moving lock plate 44 and link 41 towards base assembly 10.

Similarly, saw 100 may be changed from table saw mode (FIG. 1B) to miter saw mode (FIG. 1A) by rotating table assembly 11 in the rotational direction Y shown in FIG. 1B. In such motion, the side edge on the originally rear portion and now front portion of table assembly 11 may contact the second lowermost cam surface 43C3 shown in FIG. 3, moving lock plate 44 and link 41 towards base assembly 10. As the rotational movement of table assembly 11 approaches 180 degrees, the side edge on the originally front portion of table assembly 11 (and now returning) contacts the uppermost cam surface 43C1 shown in FIG. 3, moving lock plate 44 and link 41 towards base assembly 10.

Preferably a trough 43V will be provided between the uppermost cam surfaces 43C1 and 43C2 and the lowermost cam surfaces 43C3 and 43C4. In this manner, when table assembly 11 moves towards trough 43V (and possibly ride along the middle cam surface 43C), springs 46 and/or 47 may push cam plate 43, lock plate 44 and link 41 away from base assembly 10.

Preferably, table assembly 11 is not captured by trough 43V. Instead, base assembly 10 may have table stop assemblies 50. Referring to FIG. 2, table stop assembly 50 may include a pad 51, and a screw 52 attached to pad and 51 threadingly engaging base assembly 10 for adjusting the height of pad 51. A nut 53 may be used to fix the location of screw 52 relative to base assembly 10.

Table stop assemblies 50 may be disposed towards the front of saw 100 to stop rotation of table assembly 11 along direction Y. Similarly, table stop assemblies 50 which may be disposed towards the rear of saw 100 will preferably stop rotation of table assembly 11 along direction X. Persons skilled in the art will recognize that table stop assemblies 50 may be arranged and table assembly 11 may be shaped so that table stop assemblies 50 only contact those portions of table assembly 11 necessary to stop rotation and to avoid contact with other portions of table assembly 11 which may prevent the full rotation between modes.

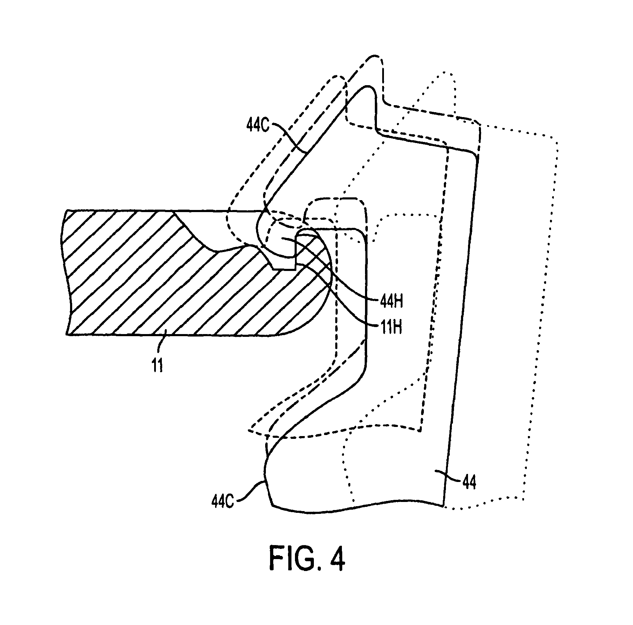

Referring to FIGS. 2 and 4, lock plate 44 is used to prevent the undesired rotation of table assembly 11. Lock plate 44 has a hook portion 44H that overlaps table assembly 11 (see position shown in broken lines in FIG. 4) to prevent it from moving in direction X unless such movement is desired. Hook portion 44H forces the user to move link 41 (and thus hook portion 44H) towards base assembly 10 in order to unlatch table assembly 11.

As shown in FIG. 1A, when saw 100 is in miter saw mode, the saw assembly 20 has its center of gravity CG behind joint 15 when saw assembly 20 is in an upper position, and in front of joint 15 when saw assembly 20 is in a lower position (shown in broken lines). Accordingly, if table assembly 11 were to be released when saw assembly 20 is in the upper position, table assembly 11 would pivot along direction.

It is desirable to prevent such rotation of table assembly 11. Table assembly 11 may thus be provided with a hook portion 11 H, which is preferably below the workpiece supporting surface of table assembly 11. If the user were to move link 41 towards base assembly 10 while saw assembly 20 was in the upper position, table assembly 11 would quickly rotate, catching hook portion 44H with hook portion 11 H (see position of lock plate 44 shown in solid line in FIG. 4). Such engagement would stop the rotation of table assembly 11.

To avoid such engagement, the user is forced to move saw assembly 20 to the lower position and lock saw assembly 20 in such position. Because the center of gravity CG of saw assembly 20 is now in front of joint 15, table assembly 11 does not rotate when released. If anything, table assembly 11 is biased away from hook portion 44H due to the relation of center of gravity CG relative to joint 15. Persons skilled in the art will recognize that at least one table stop assembly 50 will prevent further rotation of table assembly 11 even with such bias.

In such situation, when the user moves link 41, lock plate 44 is moved from the position shown in broken lines in FIG. 4 to the position shown in dots and dashes. The user's movement of link 41 and/or the interaction of table assembly 11 with cam surface 43 may further move lock plate 44 to the position shown in dots in FIG. 4, thus completely clearing table assembly 11 and allowing the user to rotate table assembly 11.

Persons skilled in the art will recognize that lock plate 44 has two cam surfaces 44C that function in a manner similar to cam surfaces 43C1 and 43C4 to assist in the movement of cam plate 43/lock plate 44/link 41.

Referring to FIGS. 1-2. link 41 may have a handle 41 H to enable the user to move link 41 (and thus lock plate 44) towards base assembly 10. Handle 41 H may extend through a housing 60 supporting an on/off switch (not shown).

## Claims

1. A power tool (100) comprising:
a base assembly (10);
a table (11) supported by the base assembly and rotatable about an axis (15) between a first position and a second position;
a saw assembly (20) supported by the table, wherein, in the first position the saw assembly is movable from an upper position to a lower position towards the table and in the second position, the saw assembly is underneath the table: and
a table latch assembly(40) for latching the table in the first and second position;
**characterized in that** the centre of gravity (CG) of the table and the saw assembly is on a first side of said axis when the saw assembly is in the upper position, and is on a second side of said axis when the saw assembly is in the lower position, and said table latch assembly prevents release of the table in the first position when the centre of gravity is on the first side of the axis.

2. The power tool of Claim 1, wherein the table latch assembly comprises a first plate (44) movably attached to the base assembly.

3. The power tool of Claim 2, wherein the first plate is pivotably attached to the base assembly.

4. The power tool of Claim 2 or 3, wherein the first plate is movable between a first position contacting the table and a second position not contacting the table.

5. The power tool of Claim 4, wherein the first plate is moved between the first and second positions by a link (41).

6. The power tool of Claim 5, wherein the link is pivotably attached to the base assembly.

7. The power tool of Claims 5 or 6, further comprising a spring (46) disposed - between the base assembly and the link for biasing the first plate towards the first position.

8. The power tool of any one of Claims 5 to 7 , wherein the link has a handle (41) for moving the first plate between the first and second positions.

9. The power tool of any one of Claims 5 to 8, wherein the link extends through the first plate.

10. The power tool of any one of claims 4 to 9, wherein the first plate is movable between the first position and a third position where the first plate is latched to the table.

11. The power tool of any one of the preceding Claims 4-10, further comprising a second plate (43) movably attached to the base assembly.

12. The power tool of Claim 11, wherein the second plate is pivotably attached to the base assembly.

13. The power tool of Claim 11 or 12, wherein the second plate is movable between a first position contacting the table and a second position not contacting the table.

14. The power tool of any one of Claims 11 to 13. wherein the second plate is moved between the first and second positions by the link.

15. The power tool of Claim 14, wherein the link extends through the second plate.

16. The power tool of any one of Claims 11 to 15, wherein the second plate has a cam surface (43C).

17. The power tool of Claim 16, wherein the second plate moves at least one of the link and the first plate towards the base assembly when the table is moved along the cam surface.

18. The power tool of any one of the preceding Claims, wherein the center of gravity of the saw assembly is on the second side of the axis when the saw assembly is in the lower position while the table is in the first position.

19. The power tool of any one of the preceding Claims, wherein the table latch assembly allows movement of the table to the second position when, in the first position, the saw assembly is in the lower position.

## Patentansprüche

1. Angetriebenes Werkzeug (100) umfassend:
eine Basisanordnung (10),
einen Tisch (11), der von der Basisanordnung gehalten ist und um eine Achse (15) zwischen einer ersten Stellung und einer zweiten Stellung drehbar ist,
eine Sägeanordnung (20), die durch den Tisch gehalten ist,
wobei in der ersten Stellung die Sägeanordnung von einer oberen Stellung in eine untere Stellung zu dem Tisch hin beweglich ist und in der zweiten Stellung die Sägeanordnung unter dem Tisch angeordnet ist, und
eine Tischverriegelungsanordnung (40) zum Verriegeln des Tisches in der ersten und zweiten Stellung,
**dadurch gekennzeichnet, dass** der Schwerpunkt (CG) des Tisches und der Sägeanordnung auf einer ersten Seite der Achse ist, wenn die Sägeanordnung in der oberen Stellung ist, und auf einer zweiten Seite der Achse ist, wenn die Sägeanordnung in der unteren Stellung ist, und wobei die Tischverriegelungsanordnung eine Freigabe des Tisches in die ersten Stellung verhindert, wenn der Schwerpunkt auf der ersten Seite der Achse ist.

2. Angetriebenes Werkzeug nach Anspruch 1, wobei die Tischverriegelungsanordnung eine erste Platte (44) umfasst, die beweglich an der Basisanordnung angebracht ist.

3. Angetriebenes Werkzeug nach Anspruch 2, wobei die erste Platte schwenkbar an der Basisanordnung angebracht ist.

4. Angetriebenes Werkzeug nach Anspruch 2 oder 3, wobei die erste Platte zwischen einer ersten Stellung, in der der Tisch berührt wird, und einer zweiten Stellung beweglich ist, in der der Tisch nicht berührt wird.

5. Angetriebenes Werkzeug nach Anspruch 4, wobei die erste Platte zwischen der ersten und zweiten Stellung durch ein Verbindungselement (41) bewegt wird.

6. Angetriebenes Werkzeug nach Anspruch 5, wobei das Verbindungselement schwenkbar an der Basisanordnung angebracht ist.

7. Angetriebenes Werkzeug nach Anspruch 5 oder 6, ferner mit einer Feder (46), die zwischen der Basisanordnung und dem Verbindungselement zum Vorspannen der ersten Platte in die erste Stellung angeordnet ist.

8. Angetriebenes Werkzeug nach einem der Ansprüche 5 oder 7, wobei das Verbindungselement einen Griff (41) zum Bewegen der ersten Platte zwischen der ersten und zweiten Stellung aufweist.

9. Angetriebenes Werkzeug nach einem der Ansprüche 5 oder 8, wobei sich das Verbindungselement durch die erste Platte erstreckt.

10. Angetriebenes Werkzeug nach einem der Ansprüche 4 oder 9, wobei die erste Platte zwischen der ersten Stellung und einer dritten Stellung beweglich ist, in der die erste Platte mit dem Tisch verriegelt ist.

11. Angetriebenes Werkzeug nach einem der vorhergehenden Ansprüche 4 bis 10, ferner mit einer zweiten Platte (43), die beweglich an der Basisanordnung angebracht ist.

12. Angetriebenes Werkzeug nach Anspruch 11, wobei die zweite Platte schwenkbar an der Basisanordnung angebracht ist.

13. Angetriebenes Werkzeug nach Anspruch 11 oder 12, wobei die zweite Platte zwischen einer ersten Stellung, in der der Tisch berührt wird, und einer zweiten Stellung beweglich ist, in der der Tisch nicht berührt wird.

14. Angetriebenes Werkzeug nach einem der Ansprüche 1 bis 13, wobei die zweite Platte zwischen der ersten und zweiten Stellung durch das Verbindungselement bewegt wird.

15. Angetriebenes Werkzeug nach Anspruch 14, wobei sich das Verbindungselement durch die zweite Platte erstreckt.

16. Angetriebenes Werkzeug nach einem der Ansprüche 11 bis 15, wobei die zweite Platte eine Nockenfläche (43C) hat.

17. Angetriebenes Werkzeug nach Anspruch 16, wobei die zweite Platte wenigstens eines aus dem Verbindungselement und der ersten Platte zu der Basisanordnung bewegt, wenn der Tisch entlang der Nockenfläche bewegt wird.

18. Angetriebenes Werkzeug nach einem der vorhergehenden Ansprüche, wobei der Schwerpunkt der Sägeanordnung auf der zweiten Seite der Achse ist, wenn die Sägeanordnung in der unteren Stellung ist, während der Tisch in der ersten Stellung ist.

19. Angetriebenes Werkzeug nach einem der vorhergehenden Ansprüche, wobei die Tischverriegelungsanordnung eine Bewegung des Tisches in die zweite Stellung erlaubt, wenn in der ersten Stellung die Sägeanordnung in der unteren Stellung ist.

## Revendications

1. Machine-outil (100) comprenant :
◆ un châssis (10) ;
◆ une table (11) supportée par le châssis et pouvant pivoter autour d'un axe (15) entre une première position et une deuxième position ;
◆ un ensemble de scie (20) supporté par la table, dans lequel, dans la première position, l'ensemble de scie est mobile depuis une position supérieure vers une position inférieure en direction de la table et, dans la deuxième position, l'ensemble de scie est sous la table ; et
◆ un ensemble de loquet de table (40) pour enclencher la table dans la première et la deuxième position ;
**caractérisé en ce que** le centre de gravité (CG) de la table et de l'ensemble de scie est sur un premier côté dudit axe lorsque l'ensemble de scie est dans la position supérieure, et est sur un second côté dudit axe lorsque l'ensemble de scie est dans la position inférieure, et ledit ensemble de loquet de table empêche la libération de la table dans la première position lorsque le centre de gravité est sur le premier côté de l'axe.

2. Machine-outil selon la revendication 1, dans laquelle l'ensemble de loquet de table comprend une première plaque (44) attachée de manière amovible au châssis.

3. Machine-outil selon la revendication 2, dans laquelle la première plaque est attachée de manière pivotante au châssis.

4. Machine-outil selon la revendication 2 ou 3, dans laquelle la première plaque est mobile entre une première position en contact avec la table et une deuxième position qui n'est pas en contact avec la table.

5. Machine-outil selon la revendication 4, dans laquelle la première plaque est déplacée entre les première et deuxième positions par un lien (41).

6. Machine-outil selon la revendication 5, dans laquelle le lien est attaché de manière pivotante au châssis.

7. Machine-outil selon la revendication 5 ou 6, comprenant en outre un ressort (46) disposé entre le châssis et le lien pour incliner la première plaque en direction de la première position.

8. Machine-outil selon l'une quelconque des revendications 5 à 7, dans laquelle le lien comporte une poignée (41) pour déplacer la première plaque entre les première et deuxième positions.

9. Machine-outil selon l'une quelconque des revendications 5 à 8, dans laquelle le lien s'étend à travers la première plaque.

10. Machine-outil selon l'une quelconque des revendications 4 à 9, dans laquelle la première plaque est mobile entre la première position et une troisième position où la première plaque est enclenchée à la table.

11. Machine-outil selon l'une quelconque des revendications 4 à 10, comprenant en outre une seconde plaque (43) attachée de manière amovible au châssis.

12. Machine-outil selon la revendication 11, dans laquelle la seconde plaque est attachée de manière pivotante au châssis.

13. Machine-outil selon la revendication 11 ou 12, dans laquelle la seconde plaque est mobile entre une première position en contact avec la table et une deuxième position qui n'est pas en contact avec la table.

14. Machine-outil selon l'une quelconque des revendications 11 à 13, dans laquelle la seconde plaque est déplacée entre les première et deuxième positions par le lien.

15. Machine-outil selon la revendication 14, dans laquelle le lien s'étend à travers la deuxième plaque.

16. Machine-outil selon l'une quelconque des revendications 11 à 15, dans laquelle la seconde plaque comporte une surface de came (43C).

17. Machine-outil selon la revendication 16, dans laquelle la seconde plaque déplace au moins un élément parmi le lien et la première plaque en direction du châssis lorsque la table est déplacée le long de la surface de came.

18. Machine-outil selon l'une quelconque des revendications précédentes, dans laquelle le centre de gravité de l'ensemble de scie est sur le second côté de l'axe lorsque l'ensemble de scie est dans la position inférieure alors que la table est dans la première position.

19. Machine-outil selon l'une quelconque des revendications précédentes, dans laquelle l'ensemble de loquet de table permet le mouvement de la table vers la seconde position lorsque, dans la première position, l'ensemble de scie est dans la position inférieure.
